# FASCICULE DE BREVET EUROPEEN

(11) **EP 0 760 759 B1**
(45) Date de publication et mention de la délivrance du brevet: **04.03.1998**
(21) Numéro de dépôt: 95919941.5
(22) Date de dépôt: 22.05.1995
(51) Int. Cl.: B60R 25/00

(54) **DISPOSITIF ANTIVOL ADAPTE AU SIEGE D'UN VEHICULE**
DIEBSTAHLSICHERUNG FÜR EINEN FAHRZEUGSITZ
ANTITHEFT DEVICE ADAPTED TO A VEHICLE SEAT

(30) Priorité: 20.05.1994 BE 9400518
(43) Date de publication de la demande: 12.03.1997
(73) Titulaire: Fontaine, Christian, 7800 Ath (BE)
(72) Inventeur: Fontaine, Christian, 7800 Ath (BE)
(74) Mandataire: Colens, Alain
(86) Numéro de dépôt international: BE9500049
(87) Numéro de publication internationale: WO9532109

(56) Documents cités:
- EP-A- 0 566 501
- DE-A- 4 240 523
- DE-C- 101 055
- DE-U- 8 715 492
- FR-A- 1 517 506
- FR-A- 2 587 663
- GB-A- 2 248 593
- PATENT ABSTRACTS OF JAPAN vol. 13, no. 340 (M-857) 31 Juillet 1989 & JP,A,01 115 758 (MAZDA MOTOR CORP.) 9 Mai 1989

## Description

La présente invention concerne un dispositif antivol mécanique et automatisable à adapter à un siège de véhicule, plus particulièrement au siège prévu pour le conducteur.

On connaît déjà des systèmes antivol se servant du fauteuil conducteur. Le brevet européen EP-B-0 414 954 divulgue le réglage du dossier et un programme d'inclinaison de celui-ci dans différentes positions, entre autres une position de blocage contre le volant avec le transfert longitudinal du siège portant le dossier.

Le brevet européen EP-B-0 442 627 revendique une unité de commande pour sièges électriques engendrant un système d'alarme lorsque le système de sécurité est armé et qu'une intrusion est détectée. Ladite unité de commande comprend des moyens oui répondent au signal d'alarme et positionne le siège du conducteur à une position qui rend difficile ou impossible la conduite du véhicule. Ce système est extrêmement coûteux en raison de sa complexité et de son automatisation ainsi que par la possibilité d'un mouvement longitudinal du volant, le tout devant être relié à un microordinateur et de plus être télécommandable.

L'art antérieur propose donc des antivols utilisant le blocage du dossier du siège conducteur contre le volant.

Ces systèmes présentent de nombreux inconvénients. Les dossiers des véhicules actuels sont suffisamment longs pour constituer des leviers assez forts pour détruire les éléments de sécurité antivol. Une fois le dossier, ou son dispositif de fixation, détruit rien n'empêche de s'asseoir sur la partie horizontale du siège et de partir avec le véhicule même si la position d'avancement du volant est au maximum. En effet rien n'empêche l'accès aux pédales de commande du véhicule. Il est alors possible de conduire sans dossier le temps de mettre le véhicule à l'abri.

Le système antivol du document EP-B-0 442 627 n'est prévu que pour des sièges à commandes électriques et utilise une télécommande dont l'efficacité est limitée. Le mouvement longitudinal du volant obligera le constructeur à passer des test d'homologation, un élément important de sécurité étant modifié. Il ne pourra par ailleurs pas, à cause du prix, équiper toute la gamme d'un même constructeur de véhicules.

Le document de brevet DE-A-101 055 décrit un siège pour cycle incorporant un système antivol dont les caractéristiques sont reprises dans le préambule de la revendication 1 annexée. Ce système est cependant limité dans son mode de réalisation et ne permet pas le blocage en position haute d'une partie mobile de l'assise.

Enfin, le document de brevet GB-A-2 248 593 divulgue un système de rabattement du dossier qui comporte cependant les désavantages déjà mentionnés ci-dessus.

La présente invention a pour but de surmonter ces désavantages en proposant un système antivol simple, économique, adaptable à toute une gamme de véhicules neufs ou déjà en circulation, mécanique mais automatisable et particulièrement performant et sûr.

Selon l'invention, on propose un dispositif de sécurité faisant appel à une modification de l'assise du siège du véhicule. Une partie de cette assise est en effet modifiée pour pouvoir pivoter et se bloquer en position antivol contre ou à proximité du volant, en empêchant ainsi à quiconque de s'asseoir et d'avoir accès normalement aux pédales de commande.

Plus particulièrement l'invention propose un siège pour véhicule incorporant un système antivol dans lequel l'assise comprend une partie fixe et une partie mobile pivotant sur un axe horizontal solidaire de et situé à l'avant de la partie fixe, perpendiculaire à l'axe du véhicule. La partie mobile est ainsi susceptible de pivoter vers le haut et vers l'avant généralement en un mouvement en arc de cercle. La partie mobile est en outre susceptible d'être bloquée par un moyen de blocage en position haute, le moyen de blocage consistant en au moins un élément généralement allongé et solidaire, à une extrémité, en pivotement, de la partie mobile. Le moyen de blocage s'engage et coulisse à travers un moyen de guidage solidaire de la partie fixe. Le moyen de blocage comprend aussi un moyen de verrouillage, permettant de bloquer la position dudit élément allongé de manière telle que la partie mobile soit maintenue dans une ou plusieurs positions hautes de blocage.

Il est ainsi pratiquement impossible de forcer la sécurité de par la qualité des matériaux et des sections employés.

Aucune homologation importante relative à la sécurité du véhicule n'est nécessaire, aucun élément vital n'étant modifié. Le système ne peut pas se déclencher de manière intempestive. Le système selon une variante, peut s'enclencher sans clé ni code. Pour réussir un vol, les candidats voleurs doivent utiliser des scies ou des disqueuses portatives et bruyantes, et doivent travailler la porte du conducteur ouverte, ce qui empêche toute intervention discrète. Ces opérations abîment par ailleurs le recouvrement du siège et le rend inutilisable.

Le système peut être installé sur le véhicule directement à la chaîne de montage sans modification de ladite chaîne. Le système est intégré au véhicule et ne fait appel à aucun élément étranger au véhicule et aucune perte de place n'en résulte. Le confort d'assise reste inchangé. Le mécanisme de sécurité est complètement indépendant et respecte tous les réglages possibles actuellement, en longueur, orientation ou hauteurs du siège.

Le système est automatisable par utilisation de différentes techniques connues en soi (électro-aimants, télécommande etc..). Une fois enclenché le système antivol est visible de l'extérieur et donc particulièrement dissuasif.

L'invention propose donc un siège pour conducteur de véhicule incorporant un système antivol dans lequel l'assise du siège comprend une partie fixe et une partie mobile. La partie mobile recouvre partiellement la partie fixe, les deux parties étant horizontales. La partie mobile comprend une armature en forme de U ou en forme de cadre ainsi que l'ensemble des éléments constituant le recouvrement et le coussin du siège du chauffeur avec son support. La partie mobile pivote sur un axe horizontal solidaire de et situé à l'avant de la partie fixe, perpendiculaire à l'axe du véhicule. La partie mobile est ainsi susceptible de pivoter vers le haut et vers l'avant généralement en un mouvement en arc de cercle. La partie mobile est en outre susceptible d'être bloquée par un moyen de blocage en position haute, le moyen de blocage consistant en au moins un élément généralement allongé et solidaire en pivotement, à une extrémité, de la partie mobile. L'ampleur du pivotement sera variable mais variera de préférence, en position de blocage, de 30 à 130° de façon à ce que le coussin du siège soit maintenu en position relevée ou même essentiellement verticale. La partie mobile en position de blocage est située contre le volant ou à proximité de celui-ci, empêchant de toute façon la conduite du véhicule.

Le moyen de blocage, qui comprend généralement une barre en acier ou matériau équivalent, s'engage et coulisse à travers un moyen de guidage solidaire de la partie fixe, p e. sous la forme d'une ouverture, tunnel ou fenêtre prévu dans un élément transversal de la partie fixe, généralement de dimension complémentaire pour ne laisser aucun jeu. Cette fenêtre est généralement de dimension complémentaire à celle de la barre en acier de façon à ne laisser aucun jeu transversal entre le moyen de blocage et le moyen de guidage. Ladite barre d'acier est solidaire en pivotement de la partie mobile et se relève avec celle-ci, en passant d'une position quasi horizontale en une position inclinée de support et blocage de la partie mobile relevée. La barre d'acier peut se présenter sous la forme du pied d'un T. Les extrémités de la barre horizontale du T s'engageant dans des logements prévus à l'intérieur des éléments latéraux de la partie mobile. Selon une variante de réalisation, il est prévu deux barres d'acier qui constituent en fait deux branches d'un U, ou encore deux côtés d'un cadre.

La partie fixe est généralement susceptible, en position de conduite du dispositif, de glisser d'une longueur limitéée sur des rails fixés au plancher pour régler de manière connue la position du siège en translation.

Le moyen de guidage comprend aussi un moyen de verrouillage, p.e. un moyen de verrouillage à serrure, permettant de bloquer la position dudit élément de blocage et plus particulièrement d'une barre le constituant, de manière telle que la partie mobile soit maintenue dans une ou plusieurs positions hautes de blocage. Le moyen de verrouillage à serrure est bien connu en soi, la barre étant munie d'éléments coopérant avec la serrure par exemples des crans, trous ou gâches. Ce moyen de verrouillage est avantageusement prévu à la partie fixe de l'assise. La clé étant de préférence introduite latéralement au siège.

On comprendra par ailleurs que la partie mobile, contrairement à la partie fixe, ne s'étendra pas jusqu'en dessous de la base du dossier afin de permettre le pivotement vers l'avant sans que le dossier ne constitue un obstacle. Selon l'invention on prévoit donc un troisième élément de coussin, ou d'élément en mousse, pour le fond du siège qui peut être en biseau entre le coussin horizontal et celui, approximativement vertical, du dossier. La pièce mobile ne s'étendra donc généralement que jusqu'à environ 70-90 % de la longueur de l'assise, c'est à dire aussi de la pièce fixe.

Une ou plusieurs barres transversales supplémentaires peuvent être prévues pour rendre l'accès à la barre de blocage et au mécanisme de verrouillage, en position relevée, extrêmement malaisé.

La partie mobile et la partie fixe sont maintenues horizontalement l'une contre l'autre, en position de conduite, par un loquet ou crochet latéral se rabattant transversalement et pouvant se débloquer manuellement. Il est prévu avantageusement un ressort faisant partiellement pivoter la partie mobile lorsque le loquet est débloqué et que le poids supporté passe sous une certaine valeur, par exemple lorsque le conducteur quitte le siège.

Selon un mode de réalisation de l'invention, le dispositif peut être adapté à un siège de conducteur existant en coupant essentiellement horizontalement dans l'armature en forme de plaque verticale formant cadre de l'assise existante. Dans ce but on soude un élément formant charnière à l'avant en reliant ainsi les deux parties de l'assise formées par le découpage et en soudant à la partie mobile et à la partie fixe la barre de blocage et la barre de guidage et de verrouillage respectivement.

Selon un mode de réalisation de l'invention, on prévoit un dispositif capable de s'adapter a un siège de conducteur existant sans couper dans l'armature. Après avoir retiré le coussin et les ressorts le supportant, on adapte a l'armature rectangulaire de l'assise une pièce recouvrant les parties latérales, pièce de section en U retourné, et épousant la forme de ces parties latérales de l'assise d'origine. Cette pièce comprendra les emplacements d'accrochage des ressorts de coussin et sera donc prévue pour pouvoir y loger après fixation le coussin et/ou le recouvrement en mousse. Cette pièce comprendra d'origine la charnière avant qui devra être fixée a la partie fixe du dispositif éventuellement avec un élément de charnière coopérant y soudé. Cette pièce comprendra aussi la barre de blocage par exemple en T, et une barre de guidage et de verrouillage à fixer, par exemple par soudage, a la partie fixe.

L'avantage de ce mode de réalisation consiste en ce que la nièce mobile peut alors être recouverte latéralement du recouvrement en tissu-mousse. On ne peut alors pas voir de séparation entre les deux pièces, ce qui constitue un avantage esthétique.

Pour la face avant, afin de permettre le pivotement, on prévoit avantageusement une garniture solidaire d'une charnière secondaire. Le pivotement serait en effet impossible si cette face avant de la partie mobile est rigidement solidaire de celle-ci.

Selon un autre aspect de l'invention, en position de blocage, le coulissement du siège sur les rails est bloqué. En position relevée, pour un système classique actuellement utilisé dans de nombreux véhicules, un ergot peut venir bloquer et empêcher la rotation de la tige de verrouillage du rail.

Le système peut être avantageusement automatisé de telle manière que l'enclenchement de la position de blocage antivol du siège s'effectue chaque fois que le moteur s'arrête et que le conducteur quitte le véhicule, c'est à dire que le poids supporté par le mécanisme descend en dessous d'une valeur prédéterminée.

L'invention sera mieux comprise à la lecture de la description qui suit en se référant aux dessins en annexe fournis à titre d'exemple uniquement.

La fig 1. représente une vue latérale d'un siège, sans dossier ni garniture, équipé du dispositif selon l'invention en position de conduite.

La fig 2. représente une vue latérale du siège de la fig. 1 en position de blocage.

La fig. 3 représente une vue en plan de la partie A mobile, avec les éléments de coussin et de recouvrement retirés.

La fig. 4 représente une vue en plan de la partie B fixe.

La fig. 5 représente une vue en plan des deux parties A et B superposées et coopérantes en position de conduite.

La fig. 6 représente schématiquement en perspective les éléments A et B assemblés en position de blocage.

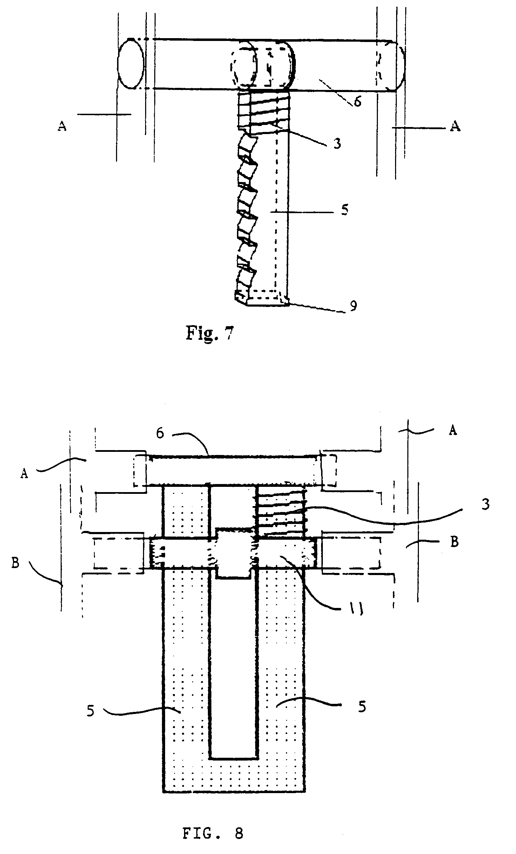

La fig. 7 représente plus en détail une pièce de blocage en T, la barre 5 étant crantée, de section rectangulaire, et pouvant pivoter par rapport au cadre A à laquelle la pièce de blocage est solidaire.

La fig. 8 représente en détail une variante de pièce de blocage, en position de conduite, la pièce de blocage étant sous la forme d'un cadre dont deux côtés coulisse dans un élément transversal solidaire de la partie B fixe.

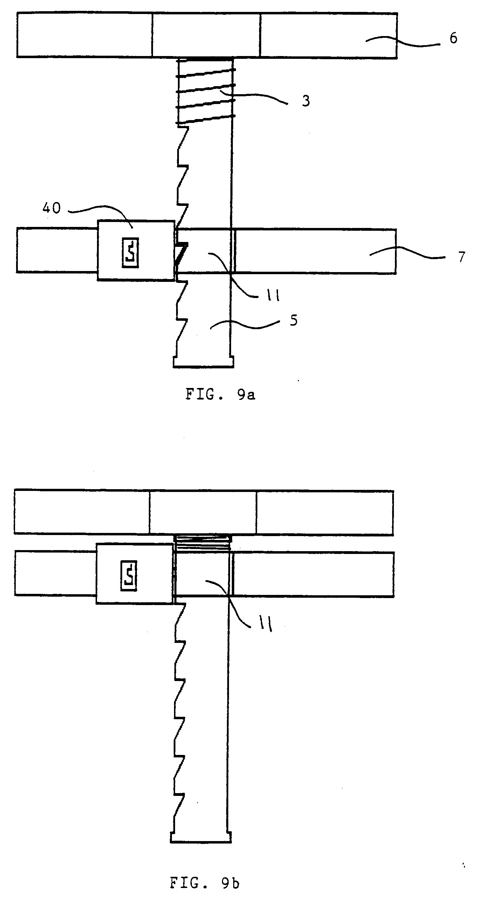

Les figs. 9a et 9b représentent schématiquement les pièces de blocage et guidage en position relevée (antivol) et de conduite respectivement.

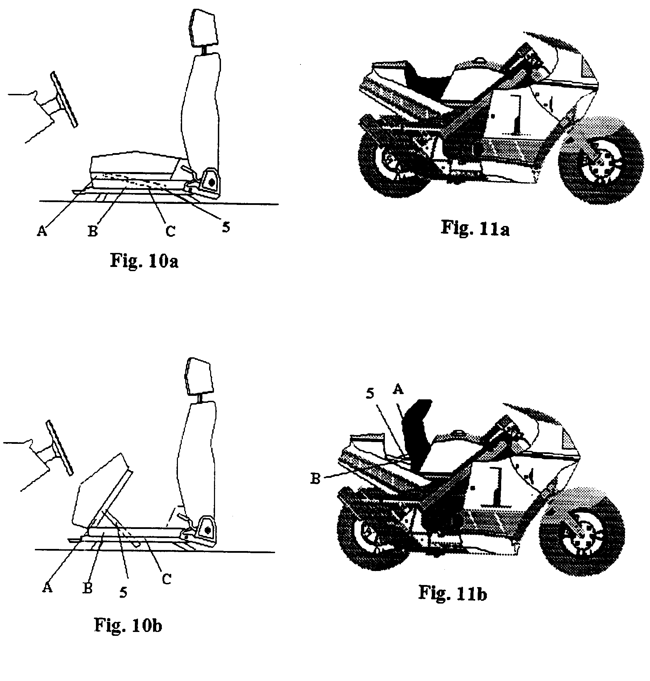

Les figs. 10a et 10b représentent un siège d'automobile selon l'invention en position de conduite et en position antivol respectivement.

Les figs. 11a et 11b représentent une motocyclette munie du dispositif selon l'invention en position de blocage normale et en position antivol.

Des références identiques se rapportent à des éléments identiques ou fonctionnellement identiques.

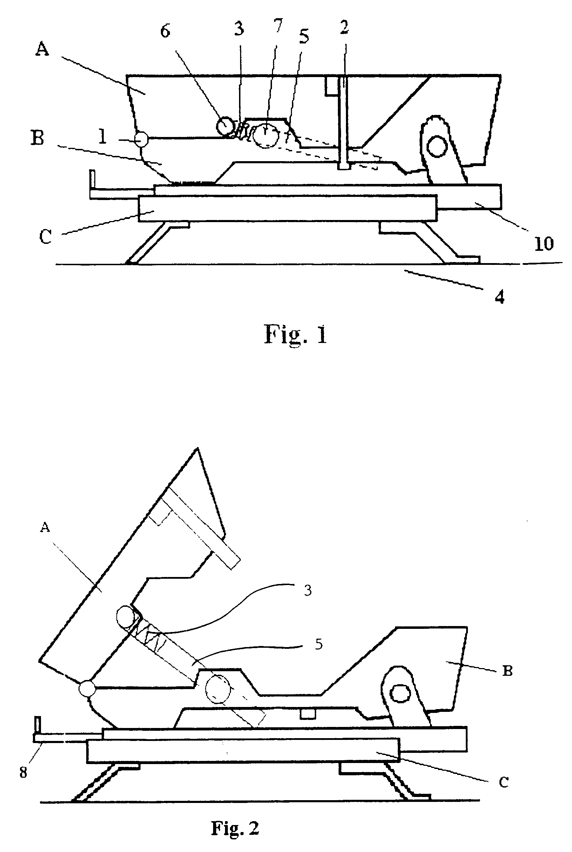

Aux figs. 1 et 2 on distingue, vu de côté et respectivement en position de conduite et de blocage, la partie supérieure A superposée horizontalement à une partie fixe B solidaire, en coulissement limité des rails 10 d'une partie C fixée au plancher 4 du véhicule. Les parties A et B comportent en commun un élément de charnière 1 horizontal et perpendiculaire au sens de déplacement du véhicule. Un loquet 2 maintient les parties A et B l'une au dessus de l'autre, à l'encontre d'un ressort de compression 3 entourant une pièce de blocage 5 qui relie les parties A et B . La pièce 5 est une pièce en T dont la barre horizontale 6 pivote autour de son axe et dont le pied traverse une barre transversale 7 munie d'une fenêtre 11 et solidaire en pivotement de la partie fixe B. On distingue enfin la tige 8 libérant le mécanisme de réglage en translation.

La fixation de la partie C est évidemment effectuée de manière telle que le siège ne puisse être retiré plus facilement que le système antivol n'est fracturé. Le siège est par exemple soudé ou fixé avec des boulons antivol. De même, il est évident que les parties A et B ne peuvent être désolidarisées des rails par simple translation, y compris après rabaissement ou enlèvement du ou des sièges arrière. Les rails seront par exemple renforcés et munis de part et d'autre de butées de blocage.

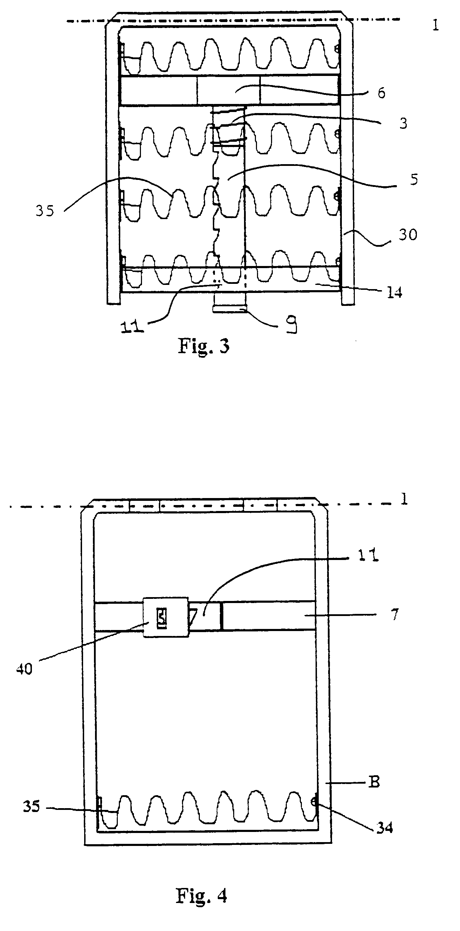

La fig. 3 représente une vue en plan de la partie A mobile, avec les éléments de coussin et de recouvrement retirés. On distingue essentiellement un cadre en U 30, la pièce de blocage 5 avec la barre du T 6 transversale et donc parallèle à l'axe de charnière 1, et le pied 8 cranté avec une butée 9 à l'extrémité libre. Le ressort 3 est décomprimé. Sur les faces intérieures des branches en U sont prévus des moyens de fixation 34 des ressorts ondulés 35 de support pour la garniture en mousse (coussin) non illustrée. On prévoit également une barre transversale 14 de renforcement pour la structure en U qui permet également de gêner l'accès, en particulier avec des outils, au système de blocage.

La fig. 4 représente une vue en plan de la partie B fixe qui comprend un cadre de longueur sensiblement supérieure à la longueur de la partie coopérante mobile. Le côté avant comprend un élément de charnière coaxial à celui de la partie mobile. On distingue la barre transversale de blocage 7 qui comprend un moyen de verrouillage 40. La barre 7 doit être susceptible de pivoter sur son axe lors du mouvement de la partie mobile par rapport à la partie fixe. Dans ce but, les extrémités de la barre 7 sont situés dans des logements prévus sur la face intérieure des côtés du cadre de la partie fixe B, logements formant ainsi support d'axe. Selon une autre variante, la barre 7 pivote dans un manchon solidaire du cadre fixe, p.e. par soudage, comportant une ouverture en son milieu pour permettre le passage de la barre de blocage. On notera à l'extrémité postérieure du cadre la présence d'un ressort ondulé transversal pour le support d'une garniture en mousse intermédiaire entre celle du dossier et celle de la partie mobile A.

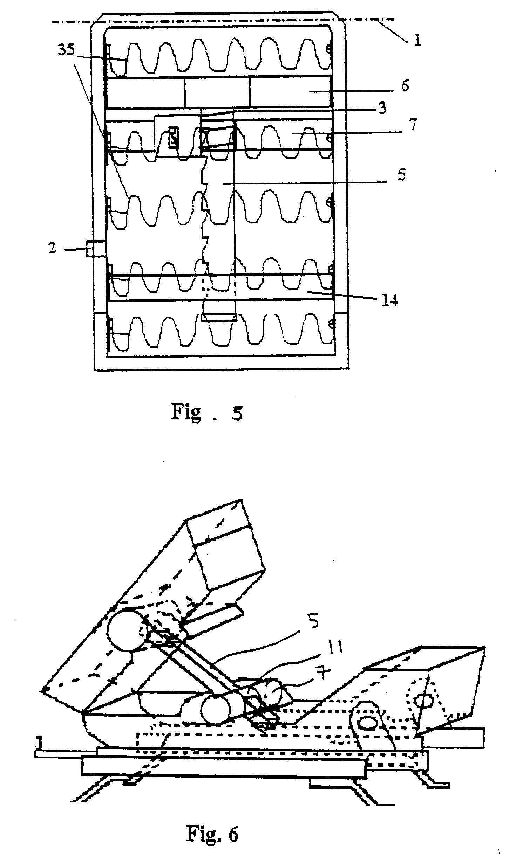

La fig. 5 représente une vue en plan des parties A et B superposées et coopérantes en position de conduite. Le ressort 3 est comprimé. Les ressorts de support de garniture en mousse ne sont pas illustrés.

Il est entendu que le moyen de verrouillage en position haute peut en fait simplement consister en un moyen de blocage des barres 6 et/ou 7 les empêchant de pivoter. Ce moyen de blocage peut se trouver avantageusement latéralement à l'extérieur du cadre de la partie fixe B, à côtés d'éventuels autres commandes de réglage du siège. La barre 32 de la fig. 3 ne doit plus alors être crantée, le tunnel de coulissement de la barre 32 ne permettant aucun jeu. Dans ce cas, comme pour la plupart des autres modes de réalisation, toutes les techniques relatives à la sécurité des serrures peuvent être appliquées dans le cadre de l'invention.

L'invention se rapporte donc à un dispositif antivol caractérisé en ce que la position de blocage est obtenue par relèvement d'au moins une partie du siège du conducteur par pivotement autour d'un axe horizontal perpendiculaire au sens de déplacement du véhicule. Il est avantageusement prévu un élément de blocage reliant la partie relevée , à une certaine distance de l'axe de pivotement, à une partie rigidement solidaire du plancher du véhicule. L'élément de blocage est maintenu en position par un élément de verrouillage qui peut être une serrure à clef ou un moyen équivalent disposé sur la partie relevée, sur la partie fixe solidaire du plancher ou sur l'élément de blocage. Ce dernier peut en effet être constitué d'une barre en deux parties télescopiques verrouillage de manière connue.

On comprendra que le dispositif selon l'invention peut donc varier dans ses détails de réalisation qui ont été présentés ci-dessus uniquement à titre d'exemple.

## Revendications

1. Siège pour véhicule incorporant un système antivol dans lequel l'assise comprend une partie fixe (B) et une partie mobile (A) pivotant sur un axe horizontal solidaire de et situé à l'avant de la partie fixe, et défini par une ou plusieurs charnières (1), perpendiculaires à l'axe du véhicule, la partie mobile (A) étant ainsi susceptible de pivoter vers le haut et vers l'avant, la partie mobile (A) étant en outre susceptible d'être bloquée par un moyen de blocage, le moyen de blocage consistant en au moins un élément rigide (5) solidaire, à une extrémité, en pivotement, de la partie mobile (A), et en un moyen de verrouillage (40), permettant de bloquer la position dudit élément rigide (5),
caractérisé en ce que ledit élément rigide (5) s'engage lors dudit pivotement à travers un moyen de guidage (11) solidaire de la partie fixe (B), et en ce que le moyen de verrouillage (40) permet de bloquer la position dudit élément rigide (5) de manière telle que la partie mobile (A) soit maintenue dans une ou plusieurs positions hautes de blocage.

2. Siège selon la revendication 1 caractérisé en ce que le moyen de guidage (11) est une ouverture prévue dans un élément (7) de la partie fixe.

3. Siège selon la revendication 1 caractérisé en ce que le moyen de blocage comprend au moins une barre (5) munie d'un ou de plusieurs éléments de blocage coopérant avec le moyen de verrouillage (40).

4. Siège selon n'importe laquelle des revendications précédentes caractérisé en ce que le moyen de verrouillage (40) est solidaire de la partie fixe (B).

5. Siège selon n'importe laquelle des revendications précédentes caractérisé en ce que le moyen de verrouillage (40) est un moyen de verrouillage à clef.

6. Siège selon n'importe laquelle des revendications précédentes caractérisé en ce que le moyen de verrouillage (40) est un moyen de verrouillage à code actionné électriquement.

7. Siège selon n'importe laquelle des revendications précédentes caractérisé en ce que le moyen de verrouillage (40) est un moyen de verrouillage électrique commandé par télécommande.

8. Siège selon n'importe laquelle des revendications précédentes caractérisé en ce que la partie mobile (A) et la partie fixe (B) sont maintenues horizontalement l'une contre l'autre, en position de conduite, par un loquet ou crochet latéral (2) pouvant se débloquer manuellement.

9. Siège selon n'importe laquelle des revendications précédentes caractérisé en ce qu'il est prévu un moyen de ressort (3) faisant partiellement pivoter la partie mobile (A) lorsque le loquet (2) est débloque.

10. Siège selon n'importe laquelle des revendications précédentes caractérisé en ce qu'il est prévu un moyen de ressort (3) faisant partiellement pivoter la partie mobile (A) lorsque le conducteur quitte le siège.

11. Siège selon n'importe laquelle des revendications précédentes dans lequel le moyen de ressort (3) est un ressort hélicoïdal, situé autour d'au moins une des barres (5), prenant appui en compression lorsque la partie mobile (A) est en position basse, d'une part sur un élément de la partie mobile (6) et d'autre part sur un élément (7) de la partie fixe adjacent à l'ouverture de guidage.

12. Siège selon n'importe laquelle des revendications précédentes caractérisé en ce que le moyen de blocage comprend un élément rectangulaire ou en U dont les deux branches ou côtés (5) constituent des barres coulissant dans le moyen de guidage (11), au moins l'une des deux branches ou côtés étant munis d'un élément susceptible de coopérer avec le moyen de verrouillage (40).

13. Siège pour véhicule selon la revendication 12 caractérisé en ce que l'élément susceptible de coopérer avec le moyen de verrouillage (40) est une gâche ou un cran.

14. Siège selon n'importe laquelle des revendications précédentes caractérisé en ce que la ou les barres (5) coulissent dans un ou plusieurs ouvertures (11) de sections complémentaires à celles des barres, ouvertures dont l'orientation peut pivoter librement dans un plan vertical lors du mouvement de la partie mobile (A).

## Claims

1. A seat for vehicle, incorporating an antitheft system , said seat having a seat portion comprising a fixed part (B) and a movable part (A) capable of pivoting about a horizontal axis situated in front of and integral with the fixed part , said axis being defined by one or more hinges (1), perpendicular to the vehicle axis, said movable part (A) being capable of pivoting upwards and forwards, said movable part (A) being furthermore able to be blocked by a blocking means, said blocking means consisting in at least a rigid member (5) integral, at one end and pivotingly, with said movable part (A), and in a locking means (40) allowing blocking of the position of said rigid member (5) characterized in that
said rigid member (5) engages during the pivoting through a guiding means (11) integral with said fixed part, and in that the locking means (40) allows the blocking of the position of said rigid member (5) in such a way that the movable part (A) is locked in one or several high blocking positions.

2. Seat according to claim 1 characterized in that the guiding means (11) is an aperture provided in a element (7) of the fixed part.

3. Seat according to claim 1 characterized in that the blocking means comprises at least one bar (5) provided with one or several blocking elements cooperating with the locking means (40).

4. Seat according to any of the preceding claims wherein the locking means (40) is integral with the fixed part (B).

5. Seat according to any of the preceding claims characterized in that the locking means (40) is a keyed locking means.

6. Seat according to any of the preceding claims characterized in that the locking means (40) is a locking means using an electrically controlled code.

7. Seat according to any of the preceding claims characterized in that the locking means (40) is a remote controlled electric locking means code.

8. Seat according to any of the preceding claims characterized in that the movable part (A) and the fixed part (B) are maintained horizontally one against the other, in the driving position, by a side latch or hook (2) able to be manually released.

9. Seat according to any of the preceding claims characterized in that there is provided a spring means (3) able to provoke a partial pivoting of the movable part (A) when the latch (2) is released.

10. Seat according to any of the preceding claims characterized in that there is provided a spring means (3) able to make the movable part (A) pivot partially when the driver leaves the seat.

11. Seat according to any of the preceding claims characterized in that the spring means (3) is a helicoidal spring, located around at least one of the bar (5), resting in compression when the movable part (A) is in a lower position, on one side on a element of the movable part (6) and on the other side on a element (7) of the fixed part adjacent to the guiding aperture.

12. Seat according to any of the preceding claims characterized in that the blocking means comprises a rectangular or U-shaped element where both branches or sides (5) constitute sliding bars through the guiding means (11), at least one of the branches or sides being provided with a member able to cooperate with the locking means (40).

13. Seat according to claim 12 wherein the element capable of cooperating with the locking means (40) is a lock or a notch.

14. Seat according to any of the preceding claims characterized in that the bar(s) (5) slide in one or several apertures (11) of sections complementary to the ones of the bars, the apertures having an orientation freely pivotable in a vertical plane during the motion of the movable part (A).

## Patentansprüche

1. Fahrzeugsitz, der ein Diebstahlsicherungssystem aufweist, bei dem der Sitz einen feststehenden Teil (B) und einen beweglichen Teil (A) umfaßt, der um eine horizontale Achse schwenkbar ist, die mit dem feststehenden Teil verbunden ist und sich vor diesem befindet, und durch eines oder mehrere Scharniere (1), die rechtwinklig zur Fahrzeugachse sind, definiert ist, wobei der bewegliche Teil (A) nach oben und nach vorne schwenkbar ist, und der bewegliche Teil (A) andererseits durch ein Blockiermittel blockierbar ist, wobei das Blockiermittel aus mindestens einem starren Element (5) besteht, das an einem äußeren Ende schwenkbar mit dem beweglichen Teil (A) verbunden ist und aus einem Verriegelungsmittel (40) besteht, das es erlaubt, die Position des starren Elementes (5) zu blockieren,
dadurch gekennzeichnet, daß dieses starre Element (5) demnach durch ein Führungsmittel (11), das mit dem feststehenden Teil (B) verbunden ist, mit dieser Schwenkung im Eingriff steht, und dadurch, daß das Verriegelungsmittel (40) es erlaubt, die Position dieses starren Elementes (5) derart zu blockieren, daß der bewegliche Teil (A) in einer oder mehreren hochgeschwenkten Blockierstellungen gehalten wird.

2. Sitz nach Anspruch 1, dadurch gekennzeichnet, daß die Führungsvorrichtung (11) eine Öffnung ist, die in einem Element (7) des feststehenden Teiles vorgesehen ist.

3. Sitz nach Anspruch 1, dadurch gekennzeichnet, daß das Blockiermittel mindestens eine Stange (5) umfaßt, die mit einem oder mehreren Blockierelementen versehen ist, die mit dem Verriegelungsmittel (40) kooperieren.

4. Sitz nach einem der vorhergehenden Ansprüche, dadurch gekennzeichnet, daß das Verriegelungsmittel (40) mit dem feststehenden Teil (B) verbunden ist.

5. Sitz nach einem der vorhergehenden Ansprüche, dadurch gekennzeichnet, daß das Verriegelungsmittel (40) ein Verriegelungsmittel mit Schlüssel ist.

6. Sitz nach einem der vorhergehenden Ansprüche, dadurch gekennzeichnet, daß das Verriegelungsmittel (40) ein Verriegelungsmittel ist, das mittels eines elektrischen Codes aktiviert wird.

7. Sitz nach einem der vorhergehenden Ansprüche, dadurch gekennzeichnet, daß das Verriegelungsmittel (40) ein elektrisches Verriegelungsmittel ist, das mittels Fernsteuerung gesteuert wird.

8. Sitz nach einem der vorhergehenden Ansprüche, dadurch gekennzeichnet, daß der bewegliche Teil (A) und der feststehende Teil (B) in fahrbereiter Stellung mittels eines Schnäppers oder eines seitlichen Hakens, der manuell deblockiert werden kann, horizontal übereinandergehalten werden.

9. Sitz nach einem der vorhergehenden Ansprüche, dadurch gekennzeichnet, daß eine Federvorrichtung (3) vorgesehen ist, die den beweglichen Teil (A) teilweise schwenkbar macht, wenn der Schnäpper (2) deblockiert ist.

10. Sitz nach einem der vorhergehenden Ansprüche, dadurch gekennzeichnet, daß eine Federvorrichtung (3) vorgesehen ist, die den beweglichen Teil (A) teilweise schwenkbar macht, wenn der Fahrer den Sitz verläßt.

11. Sitz nach einem der vorhergehenden Ansprüche, wobei die Federvorrichtung (3) eine spiralförmige Feder ist, die um mindestens eine der Stangen (5) herum angeordnet ist, die in komprimiertem Zustand, wenn der bewegliche Teil (A) unten ist, sich einerseits auf ein Element des beweglichen Teiles (6) und andererseits auf ein Element (7) des feststehenden Teils stützt, das zur Führungsöffnung benachbart ist.

12. Sitz nach einem der vorhergehenden Ansprüche, dadurch gekennzeichnet, daß das Blockiermittel ein rechtwinkliges oder U-förmiges Element umfaßt, dessen beide Schenkel oder Seiten (5) Gleitstangen in der Führungsvorrichtung (11) bilden, wobei mindestens einer der beiden Schenkel oder Seiten mit einem Element versehen ist, das in der Lage ist, mit dem Verriegelungsmittel (40) zu kooperieren.

13. Fahrzeugsitz nach Anspruch 12, dadurch gekennzeichnet, daß das zum Kooperieren mit dem Verriegelungsmittel (40) geeignete Element ein Schließhaken oder eine Einkerbung ist.

14. Sitz nach einem der vorhergehenden Ansprüche, dadurch gekennzeichnet, daß die Stange oder die Stangen (5) in einer oder mehreren Öffnungen (11) in Sektionen gleiten, die zu denjenigen der Stangen komplementär sind, wobei die Orientierung der Öffnungen in einer zur Bewegung des beweglichen Teiles (A) vertikalen Ebene frei schwenken kann.
